(19) Europäisches Patentamt
European Patent Office
Office européen des brevets

(11) **EP 2 130 891 B1**

(12) **EUROPEAN PATENT SPECIFICATION**

(45) Date of publication and mention
of the grant of the patent:
**24.10.2018 Bulletin 2018/43**

(21) Application number: **08738883.1**

(22) Date of filing: **26.03.2008**

(51) Int Cl.:
*C09K 3/10* $^{(2006.01)}$      *F16J 15/10* $^{(2006.01)}$

(86) International application number:
**PCT/JP2008/055659**

(87) International publication number:
**WO 2008/126673 (23.10.2008 Gazette 2008/43)**

(54) **EPDM SEALING COMPOUND AND CAP WITH THE SAME APPLIED THERETO**

EPDM-DICHTUNGSVERBINDUNG UND KAPPE DAMIT

MATÉRIAU D'ÉTANCHÉITÉ À BASE D'EPDM ET CAPUCHON AUQUEL LEDIT MATÉRIAU
D'ÉTANCHÉITÉ A ÉTÉ APPLIQUÉ

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **29.03.2007 JP 2007089468**

(43) Date of publication of application:
**09.12.2009 Bulletin 2009/50**

(73) Proprietors:
• **Toyo Seikan Kaisha, Ltd.
Shinagawa-ku
Tokyo 141-8640 (JP)**
• **Fukuoka Packing Co., Ltd.
Saitama 347-0107 (JP)**

(72) Inventors:
• **HIROTSU, Munemitsu
Yokohama-shi
Kanagawa 230-0001 (JP)**

• **SHIMADA, Yoshiharu
Kitasaitama-gun
Saitama 347-0107 (JP)**

(74) Representative: **Manley, Nicholas Michael
WP Thompson
8th Floor
1 Mann Island
Liverpool L3 1BP (GB)**

(56) References cited:
GB-A- 1 214 940      JP-A- 01 240 590
JP-A- 62 181 382      JP-A- H01 240 590
JP-A- 2001 063 750    JP-A- 2005 290 326
US-A- 4 818 785

**Description**

Technical Field:

This invention relates to a sealing compound using an ethylene propylene nonconjugated diene copolymer rubber as a chief component. More specifically, the invention relates to an aqueous sealing compound using, as a chief component, an ethylene propylene nonconjugated diene copolymer rubber having excellent resistance against the content, coating property, double-seam workability and sealing performance, and to a lid coated with the sealing compound.

Background Art:

In sealing the contents in a container by double-seaming the container with a lid, a sealing compound has heretofore been used being applied to the lid so as to be interposed between the lid and the container to attain the sealing upon being double-seamed. When the content is a motor oil, a lubricant for industrial use or a chemical product, in particular, the sealing compound used for the container is the one that contains an oil-resistant chloroprene rubber or an acrylonitrile butadiene rubber as a chief component.

However, the chloroprene rubber which contains chlorine is accompanied by a problem of causing rust and generating dioxin when burned. The acrylonitrile-butadiene rubber (hereinafter often referred to as "NBR") is, usually, blended with a softening agent since a film thereof is hard, and exhibits excellently sealing performance and durability when the content is a good solvent such as toluene or the like but fails to exhibit satisfactory sealing property or durability when the content is a bad solvent such as alcohols or motor oils.

Further, the sealing rubber composition is usually used being dissolved in a solvent. It is, therefore, desired that the sealing rubber composition is of the aqueous type from the standpoint of effect upon the environment when the solvent is volatilized and handling.

In order to solve the above problem, the present applicant has proposed a metal container sealing composition comprising an aqueous dispersion solution which contains the NBR and a styrene-butadiene rubber (hereinafter often referred to as "SBR") (patent document 1).

Patent document 1: JP-A-2005-146138

US 4,818,785 describes a fine particulate crosslinked amorphous copolymer comprising an amorphous copolymer having a constituent unit originating at least from ethylene and α-olefin, and having an average particle diameter of 0.2 to 50 μm and a hot toluene insolubles content of 15% by weight or more.

GB1214940 describes a coating composition comprising a tripolymer of ethylene-propylene and a polyene (as described therein) which includes, as a thickener, a vegetable material which is capable of swelling in water.

US 5,807,918 describes both a method for bonding at least two elastomeric substrates together, wherein one of the substrates is a tire casing and another substrate is a tire tread, and an aqueous color changeable adhesive for effecting the bonding. The method includes the steps of buffing at least one surface of at least one of the substrates to Rubber Manufacturers Association standard RMA 2 or RMA 3, applying the color changeable aqueous adhesive to the at least one surface, drying the adhesive for at least a period of time to permit an initial light grey color of the adhesive as applied to change to a flat black, and contacting the substrates under pressure to bond the substrates together. The color changeable aqueous adhesive includes at least a rubber latex emulsion, a tackifier, a pH adjustment agent, and a carbon black emulsion, wherein the carbon black functions both as a reinforcing agent and a visible color indicia means for evaluating the degree of dryness of the adhesive which correlates to the degree of tack of the adhesive. The carbon black is a lampblack.

JP2005290326 describes an aqueous sealing compound for the cap of the can composed of a rubber, a filler, a resin and the other necessary adjuvant(s) containing at least 20-110 pts.wt. of an aluminum compound filler and 0.1-20 pts.wt. of a styrene maleic acid copolymer based on 100 pts.wt. of the rubber.

Disclosure of the Invention:

Problems to be Solved by the Invention:

The metal container sealing composition comprising the aqueous dispersion solution which contains the NBR and SBR exhibits excellently sealing performance and durability not only for good solvents such as toluene and the like but also when used for metal container lids for containing bad solvents such as alcohols and motor oils, and is, further, desirable from the standpoint of effect upon the environment and handling. However, the above metal container sealing composition does not exhibit resistance to all solvents and fails to exhibit the above excellent resistance against the solvent particularly when it is used for the containers for containing particular solvents such as chlorine-containing solvents and esters, failing to satisfy sealing property and durability.

It is, therefore, an object of the present invention to provide a sealing compound which has excellent resistance against the contents that could not be handled with the metal container sealing compositions comprising the aqueous dispersion solution containing the NBR and SBR, and exhibits excellently sealing performance and durability even when used for such contents.

Another object of the present invention is to provide a sealing compound which can be excellently double-seam worked and applied, and is environmentally friendly and can be easily handled.

Means for Solving the Problem:

According to the present invention, use of a composition as a sealing compound, said composition comprising:

an aqueous dispersion which contains a rubber component of a latex of an ethylene propylene nonconjugated diene copolymer rubber as a chief component,
a vulcanizing agent in an amount of 5 to 50 parts by weight per 100 parts by weight of said rubber component;
a vulcanizing accelerator in an amount of 0.04 to 4 parts by weight per 100 parts by weight of said rubber component; and
a filler;
said sealing compound being used for double-seamed portions of caulked portions between a container and a lid, or between a cell casing and an end portion of the cell casing.

In the sealing compound of the present invention, it is desired that:

1. The filler is contained in an amount of 15 to 100 parts by weight per 100 parts by weight of the rubber component;
2. A thickening agent is contained in an amount of 0.2 to 5 parts by weight per 100 parts by weight of the rubber component;
3. A dispersion stabilizer is contained in an amount of 0.2 to 5 parts by weight per 100 parts by weight of the rubber component; and
4. A BH viscosity is in a range of 300 to 10,000 mPa.s.

Effect of the Invention:

The sealing compound of the present invention makes it possible to obtain excellent resistance against the content and, particularly, excellent resistance against the chlorine-containing solvents, esters, ketones and ethers, which could not be realized with the sealing material containing NBR and SBR as chief components.

While containing the EPDM as the chief component, the sealing compound exhibits excellent double-seam workability and anti-aging property realizing excellently sealing performance over extended periods of time.

Further, the sealing compound of the invention is in the form of an aqueous dispersion and little affects the environment since no solvent volatilizes, and can be favorably preserved and handled owing to its excellent dispersion stability.

The lid coated with the sealing compound of the present invention can be excellently double-seamed or caulked with the container to exhibit excellent sealing performance. Besides, the lid features excellent resistance against the content and resistance against being eluted out into the content.

Best Mode for Carrying Out the Invention:

It is important that the sealing compound of the present invention comprises an aqueous dispersant containing a rubber component of an ethylene propylene nonconjugated diene copolymer rubber (hereinafter often referred to as "EPDM"), a vulcanizing agent, a vulcanization accelerator and a filler.

The present inventors have discovered that the EPDM exhibits excellent resistance against the solvent and, particularly, against the cholorine-containing solvent, ketones, esters and ethers which could not be dealt with by using the SBR, NBR, natural rubber (hereinafter often referred to as "NR") or by using the conventional sealing compounds containing the NBR and SBR as chief components, have attempted to use the EPDM as a chief component of the sealing compound and have prepared the sealing compound adapted to the above solvents.

However, the EPDM is very strongly elastic and is not by itself capable of satisfying the double-seam workability required for the sealing compound. That is, when double-seamed, the sealing compound comprising the EPDM alone develops voids in the double-seamed portion making it difficult to obtain satisfactory sealing performance.

From the above point of view according to the present invention, the sealing compound using the EPDM as a chief rubber component is blended with a filler having a small reinforcing property, such as titanium oxide or aluminum hydroxide to fill the voids in the double-seamed portion and to impart forming property that complies with the double-seam working.

Further, the EPDM has a little vulcanizing property and must, therefore, be blended with a vulcanizing agent and a vulcanization accelerator, enabling the formed sealing film to exhibit improved resistance against the solvent and improved physical strength and, therefore, exhibiting resistance against the solvent compounded by the properties possessed by the EPDM, which could not be attained by using the above sealing material containing NBR and SBR.

The sealing compound of the present invention is in the form of an aqueous dispersion containing the EPDM as a chief component, and little affects the working environment and can be favorably handled. In particular, the sealing compound in the form of an aqueous dispersion having a BH viscosity in a range of 300 to 10,000 mPa·s can be applied by nozzle lining and can, hence, be excellently applied. If the BH viscosity exceeds the above range, it becomes difficult to blow out the sealing compound from the nozzle. Besides, the sealing compound spreads little on the surface of the lid on where it is applied. If the BH viscosity becomes lower than the above range, the sealing compound flows after it is applied and tends to be repelled.

The action and effect of the invention will also become obvious from the results of Examples appearing later.

That is, as will be obvious from the results of swelling degree testing shown in Table 3, the sealing films comprising the sealing compound of the invention using the EPDM exhibit excellent resistance against the contents of chlorine-containing solvent, ketones, esters and ethers (Examples 1 to 3). However, the sealing compound in which the rubber component is the SBR (Comparative Example 1), sealing compound comprising the NBR (Comparative Example 2), sealing compound comprising the vulcanized NR (Comparative Example 3), sealing compound using the SBR as a chief component and containing the EPDM (Comparative Example 4), and sealing compound comprising the SBR and NBR (Comparative Example 5) all have no resistance against the chlorine-containing solvent, and exhibit resistance against ketones, esters and ethers, which is very inferior to the resistance attained by the present invention.

Further, as will be obvious from the results of the thermal aging test shown in Table 4, the sealing film comprising the sealing compound of the invention using the EPDM (Example 1) exhibits a small change in the breaking elongation after the heat treatment and maintains a large value proving excellent resistance against the aging as compared to those using other rubber component SBR (Comparative Example 1), NBR (Comparative Example 2), vulcanized NR (Comparative Example 3), and NBR + SBR (Comparative Example 5).

As will be obvious from Table 2, further, when not being blended with the filler, the sealing compound containing the rubber component of EPDM as a chief component exhibits poor double-seam workability and sealing performance (Comparative Example 6). Further, when not being blended with the vulcanizing agent and/or the vulcanization accelerator, the sealing compound containing the rubber component of EPDM as a chief component exhibits poor sealing performance (Comparative Examples 7 and 8).

(Rubber Component)

The EPDM used for the sealing compound of the present invention is a copolymerized rubber containing ethylene, propylene and nonconjugated diene as essential components.

As the nonconjugated diene, chain dienes or cyclic dienes can be used in a single kind or in a combination of two or more kinds. For example, there can be used chain nonconjugated dienes such as 1,4-hexadiene, 3-methyl-1,4-hexadiene, 4-methyl-1,4-hexadiene, 5-methyl-1,4-hexadiene, and 4,5-dimethyl-1,4-hexadiene; and cyclic nonconjugated dienes such as 5-methylene-2-norbornene, 5-ethylidene-2-norbornene, dicyclopentadiene, and dicyclooctadiene, to which only, however, the nonconjugated diene is not limited, as a matter of course.

In the sealing compound of the present invention, it is desired that not less than 60% by weight and, more preferably, not less than 70% by weight of the whole rubber component is the EPDM. Further, the whole rubber component may comprise the EPDM only. When the sealing compound comprises a plurality of rubber components including other rubber components than the EPDM, these other rubber components may be blended only when the EPDM is blended in the greatest amount.

The other rubber components that can be blended may be the rubber components that have heretofore been used for the sealing compounds for metal lids, such as styrene-butadiene rubber (SBR), acrylonitrile-butadiene rubber (NBR), carboxylated SBR or NBR, natural rubber (NR), isoprene rubber, butadiene rubber, butyl rubber and acrylic rubber.

It is important that the sealing compound of the present invention is in the form of an aqueous dispersion from the standpoint of applicability and handling. Therefore the rubber component is a latex preferably obtained by the emulsion polymerization.

It is desired that the latex of rubber component has a solid component concentration in a range of 20 to 80% by weight, an average particle size in a range of 0.1 to 2 $\mu$m and a viscosity in a range of 150 to 1500 mPa·s.

(Filler)

The sealing compound of the present invention chiefly contains the EPDM as the rubber component and is blended with a filler for improving workability such as double-seaming or caulking.

As described above, the EPDM by itself is too strongly elastic. By adding a filler thereto, therefore, plasticity is imparted to fill the voids at the time of double-seam or caulk working to thereby impart formability to comply with the double-seam working.

Though not limited thereto only, examples of the filler that can be used for the sealing compound of the invention include aluminum hydroxide, white carbon, talc, clay, titanium oxide, carbon black, aluminum oxide hydrate, aluminum oxide, aluminum white, dolomite, alumina sulfate, barium sulfate, magnesium carbonate, magnesium silicate, magnesium oxide, calcium sulfate, fly ash, pumice powder, glass powder, diatomaceous earth, bentonite, as well as organic powder and hollow particles thereof, which may be used in a single kind or in a combination of a plurality of kinds thereof.

Among them, aluminum hydroxide, titanium oxide, carbon black, talc, clay and bentonite can be preferably used.

It is desired that the filler is blended in an amount of 15 to 100 parts by weight and, particularly, 20 to 50 parts by weight per 100 parts by weight of the rubber component. When the amount of the filler is smaller than the above range, satisfactory workability and formability are not obtained. When the amount of the filler is larger than the above range, on the other hand, the sealing performance may become inferior to that of when the amount of the filler is in the above range.

(Vulcanizing Agent and Vulcanization Accelerator)

The sealing compound of the present invention is blended with the vulcanizing agent and the vulcanization accelerator in combination to impart to the formed sealing film excellent resistance against the solvent and excellent physical strength.

The vulcanizing agent may be of the sulfur type comprising a sulfur-containing compound such as sulfur, polysulfide or sulfur chloride; of the oxime type such as p-quinone dioxime or p-p-dibenzoylquinone oxime; of the organoperoxide type such as t-butyl hydroperoxide, acetylacetone peroxide or cumene hydroperoxide; or metal oxide such as zinc oxide, organic polyvalent amine or modified phenol resin. A plurality of kinds of vulcanizing agents may be used in combination.

In the present invention, it is desired that the vulcanizing agent contains, particularly, sulfur and/or a zinc oxide.

The vulcanizing agent is blended in an amount in a range of 5 to 50 parts by weight and, particularly, 15 to 35 parts by weight per 100 parts by weight of the rubber component. When the amount of the vulcanizing agent is smaller than the above range, the resistance against the solvent becomes poorer than when the amount thereof is in the above range. When the amount of the vulcanizing agent is larger than the above range, on the other hand, the film-forming property becomes poor such as developing cracks at the time of drying the sealing film.

As the vulcanization accelerator blended for accelerating the vulcanization treatment, there can be exemplified those of the thiuram type, such as tetramethylthiuram disulfide, tetrabutylthiuram disulfide, tetramethylthiuram monosulfide and dipentamethylenethiuram tetrasulfide; those of the thiazole type, such as 2-mercaptobenzothiazole, dibenzothiazole disulfide; those of the dithiocarbamate, such as zinc dimethyldithiocarbamate, zinc diethyldithiocarbamate and zinc dibutyldithiocarbamate; those of the aldehydeamine type, such as n-butyaldehydeaniline; those of the sulfeneamide type, such as N-cyclohexyl-2-benzothiazylsulfeneamide; those of the guanidine type, such as diorthotolylguanidine and diorthonitrileguanidine; those of the thiourea type, such as thiocarbanilide, diethylthiourea and trimethylthiourea; and zinc flower. A plurality of kinds of vulcanization accelerators may be used in combination.

As the vulcanization accelerator of the present invention, it is particularly desired to use at least one or more kinds of zinc dibutylthiocarbamate, zinc salt of 2-mercaptobenzothiazole and dipentamethylenethiuram tetrasulfide. The vulcanization accelerator is blended in an amount in a range of 0.05 to 4 parts by weight and, particularly, 0.5 to 3 parts by weight per 100 parts by weight of the rubber component. When the amount of the vulcanization accelerator is smaller than the above range, it becomes difficult to efficiently execute the vulcanization. Even when the amount of the vulcanization accelerator is larger than the above range, on the other hand, the vulcanization cannot be efficiently executed, which is disadvantageous in economy.

(Other Blending Agents)

The sealing compound of the present invention can be further blended with a thickening agent, a dispersion stabilizer, an anti-aging agent and a pigment in addition to the filler, vulcanizing agent and vulcanization accelerator.

In the present invention, it is particularly desired to use the thickening agent. Namely, upon being blended with the thickening agent, the sealing compound acquires viscosity adapted to being applied to the lid through a nozzle and can be excellently applied without repelled on the applied surface and without hanging from the applied surface.

As the thickening agent, there can be used methyl cellulose, hydroxypropylmethyl cellulose, hydroxyethyl cellulose, carboxymethyl cellulose, (sodium, zinc) alginate, polyvinyl alcohol, sodium polyacrylate and Karaya gum. A plurality of kinds of the thickening agent may be used in combination. The thickening agent of the present invention, it is particularly desired to use methyl cellulose and Karaya gum.

It is desired that the thickening agent is blended in an amount in a range of 0.2 to 5 parts by weight and, particularly, 1.5 to 3.5 parts by weight per 100 parts by weight of the rubber component. When the amount of the thickening agent is smaller than the above range, the effect of the thickening agent is not obtained to a sufficient degree. When the amount of the thickening agent is larger than the above range, on the other hand, the viscosity becomes too high; i.e., it becomes difficult to maintain a viscosity adapted to forming the lining through the nozzle.

In the invention, further, it is particularly desired to use the dispersion stabilizer. Upon being blended with the dispersion stabilizer, the rubber component and the filler are suppressed from separating, sinking or floating when the sealing compound in the form of an aqueous dispersion is maintained still and preserved; i.e., the sealing compound having stable properties is obtained.

As the dispersion stabilizer, there can be used fatty acids such as oleic acid, stearic acid, palmitic acid, lauric acid and myristic acid; resin acids such as rhodinic acid; organic sulfonic acids such as alkylallylsulfonic acid, sulfonate of dibasic fatty acid ester and sulfonic acid of aliphatic amide; and sodium salts, potassium salts and ammonium salts of the above acids. A plurality of kinds of the dispersion stabilizers may be used in combination.

As the dispersion stabilizer of the present invention, there can be favorably used a sodium salt of dodecylbenzenesulfonic acid and a sodium salt of naphthalenesulfonic acid/formalin condensate.

It is desired that the dispersion stabilizer is blended in an amount of 0.2 to 5 parts by weight and, particularly, 0.5 to 3 parts by weight per 100 parts by weight of the rubber component. When the amount of the dispersion stabilizer is smaller than the above range, the effect of the dispersion stabilizer is not obtained to a sufficient degree. Even when the amount of the dispersion stabilizer is larger than the above range, on the other hand, there is a limit in improving the dispersion property, which is not advantageous in economy.

It is further desired to use an anti-aging agent to prevent the rubber from aging. The anti-aging agent may be NNdi-$\beta$-naphthyl-P-phenyldiamine, 2,2-methylene-bis-[6-(1-methylcyclohexyl-p-cresol)], hindered phenol type reducing substance and vitamin E type reducing substance, and is desirably used in an amount of 0.2 to 1 part by weight per 100 parts by weight of the rubber component.

(Preparation of a Sealing Compound)

The sealing compound of the present invention which is in the form of an aqueous dispersion is prepared by diluting or concentrating a latex of the rubber component comprising chiefly the EPDM so as to possess the above-mentioned average particle size, viscosity and solid component concentration, blending the latex with the filler, vulcanizing agent, vulcanization accelerator and, further as required, such additives as thickening agent, dispersion stabilizer, anti-aging agent and pigment, and mixing and stirring them together.

The sealing compound can be used in the form of an aqueous dispersion by being directly applied to the container lid and the like members, and forms a sealing member upon being heated at a temperature of 50 to 150°C for 3 to 60 minutes.

(Lid)

The sealing compound of the present invention is used for double-seamed or caulked portions between a container and a lid, or between a cell casing and an end portion of the cell casing. It can be preferably used for metal container lids, caps, mountain cups used for aerosol containers, ends double-seamed to the container body such as the top portion and the bottom portion of an 18-liter can and a three-piece container, and double-seamed or caulked ends of a cell casing such as of a secondary cell.

Examples of the metal blank for metal containers on which the sealing compound of the invention is applied include known metal blanks for producing metal containers, such as a variety of surface-treated steel sheets and light metal sheets such as of aluminum. As the surface-treated steel sheet, there is selectively used, depending on the application, a cold-rolled steel sheet obtained by cold-rolling a hot-rolled steel sheet of an ordinary aluminum killed steel followed by annealing, tempering and rolling, or a cold-rolled steel sheet which after annealed is, further, cold-rolled to increase the strength. The cold-rolled steel sheets may further be subjected to one or two or more kinds of surface treatments such as zinc plating, tin plating, nickel plating, electrolytic chromate treatment and treatment with chromic acid. There can be further used aluminum-coated steel sheets subjected to the aluminum plating and aluminum rolling. As the light metal sheets, there can be used the so-called pure aluminum sheet as well as the aluminum alloy sheet. Concrete examples of the aluminum alloy sheet include those of aluminum/copper alloy, aluminum/manganese alloy, aluminum/silicon alloy, aluminum/magnesium alloy, aluminum/magnesium/silicon alloy, aluminum/zinc alloy, aluminum/zinc/magnesium alloy, and aluminum alloy. There can be further exemplified clad members using core members of the above aluminum alloys and using a core member of a pure aluminum layer having an aluminum purity of not less than 99.5%. Further, the surfaces of the aluminum member may be subjected to the inorganic surface treatment with phosphoric acid and chromate, with zirconium phosphate or with phosphoric acid, may be subjected to the organic surface treatment with polyacrylic acid, with phenol resin or with tannic acid, or may be subjected to the organic/inorganic composite treatment of a combination thereof to form a film on the surface thereof.

These metal blanks may have neither a resin film nor a protection film, or may be coated with a resin such as polyolefin resin or polyester resin, or may be coated with a film of an epoxy coating material. In particular, the sealing compound of the present invention excellently adheres to the polypropylene and can, therefore, be favorably used for the metal blanks coated with the polypropylene film.

Further, the sealing member formed by using the sealing compound of the present invention can be preferably used for the containers for containing solvents, chemical products and beverages.

Though there is no particular limitation, examples of the contents for which the sealing compound of the invention exhibits particularly excellent resistance include chlorine type solvents such as methylene chloride; ketones such as acetone; esters such as ethyl acetate, ethylene carbonate and dimethyl carbonate; ethers such as diethyl ether; and glycol ethers such as ethyl cellosolve.

EXAMPLES

The invention will be described in further detail with reference to Examples in which parts and percents are all by weight.

(Example 1)

(Preparation of a Compound)

Into a suitable amount of ion-exchanged water were introduced 0.5 parts of a dispersion stabilizer (sodium salt of naphthalenesulfonic acid/formalin condensate), 0.5 parts of an anti-aging agent (2,2-methylene-bis-[6-(1-methylcyclohexyl-p-cresol)]), 12 parts of titanium oxide as a filler, 20 parts of aluminum hydroxide, 20 parts of zinc oxide and 0.5 parts of sulfur as a vulcanizing agent and as a vulcanization accelerator, and 0.1 part of zinc dibutyldithiocarbamate. The mixture was dispersed in a ball mill to obtain an aqueous dispersion solution of the inorganic filler. Into the filler dispersed solution were added ion-exchanged water, 1.5 parts of a sodium dodecylbenzenesulfonate as a dispersion stabilizer, 100 parts of an EPDM latex as an elastomer calculated as a solid component, and 3 parts of methyl cellulose as a thickening agent. The mixture was stirred to prepare a sealing compound having a solid content of 35%.

(Preparation of a Can Lid and a Can Body)

A polypropylene film of a thickness of 30 $\mu$m was heat-melt-adhered onto the inner and outer surfaces of a 0.3 mm-thick aluminum alloy (JIS3004) sheet at a sheet temperature of 180°C to prepare a polypropylene film-laminated aluminum alloy sheet.

Next, a disk of a diameter of 96 mm was punched from the polypropylene film-laminated aluminum alloy sheet. Relying on the press working, an annular groove was formed in the circumferential edge portion of the disk for preventing deformation caused by the internal and external pressures, and a curled portion for double-seaming was formed on the outer circumference thereof. The sealing compound prepared above was uniformly applied onto the inner surface of the curled portion in an amount of 52 mm$^3$, and was dried at 100°C for 60 minutes to prepare a circular lid.

Further, a circular blank of a diameter of 147 mm was cut out from the same polypropylene film-laminated aluminum alloy sheet, a cylindrical punched can was made therefrom by draw forming, and the opening portion was trimmed to trim the height followed by flanging to prepare a cylindrical can having a diameter of 75 mm and a height of 47 mm.

(Examples 2 to 9, Comparative Examples 1 to 8)

The compounds same as those used in Example 1 were blended and mixed in amounts as shown in Tables 1 and 2 to prepare sealing compounds.

The sealing compounds prepared in Examples and in Comparative Examples were tested for their swelling degrees, anti-aging properties, lining adaptability, double-seam adaptability and sealing performance according to methods described below.

(Swelling Degree Test)

The sealing compounds prepared in Examples 1 to 3 and in Comparative Examples 1 to 5 were applied, by using an applicator having an opening of 1. 0 mm and a width of 40 mm, onto the sheets which have been coated with a polytetrafluoroethylene. Thereafter, the sealing compounds were air-dried for 24 hours, and were heated in an electric oven of the type of circulating the hot air of 90°C for 10 minutes. The cured sealing compounds were peeled off the sheets and were punched with a circular dumbbell of a diameter of 25 mm to prepare test pieces (thickness: about 0.25 mm).

The prepared test pieces were immersed in immersion solutions of methylene chloride, acetone, ethyl acetate and ethyl cellosolve maintained at room temperature of 20°C for 72 hours. Thereafter, the test pieces were taken out of the immersion solutions, and from which the immersion solutions were quickly wiped off by using a filtering paper. The test pieces were measured for their weights before immersed and after immersed to find their swelling degrees according to the following formula. The evaluated results of the swelling degree testing were as shown in Table 3.

$$\text{Swelling degree } \% = [(W_s - W_o)/W_o] \times 100$$

Wo: Weight of the test piece before immersed.
Ws: Weight of the test piece after immersed.
◎: Less than 100%
○: Not less than 100% but less than 200%.
X: Not less than 200%.

The overall decisions in Table 3 were those of the worst results.

(Thermal Aging Test (Tensile Test))

Dry films of the sealing compounds prepared in Example 1 and in Comparative Examples 1 to 3 and 5 were punched by using a No. 2 dumbbell to prepare test pieces. The test pieces were separately heated; i.e., were not heated, were heated in an oven at 150°C for one hour, and were heated in an oven at 150°C for 12 hours. The test pieces were, thereafter, subjected to the tensile test in compliance with JIS K 6251 to measure the degrees of thermal aging at their breaking elongations. The evaluated results of the thermal aging test were as shown in Table 4.

(Lining Adaptability)

By using a single-head nozzle lining machine, the sealing compounds shown in Tables 1 and 2 were applied onto the inner surfaces of the curled portions of the polypropylene film-laminated aluminum lids prepared above in an amount of 52 mm$^3$, and the lining operation adaptability was evaluated on the following basis. The evaluated results were as shown in Tables 1 and 2.

Basis of evaluation: If the sealing compounds were easily blown out from the nozzle, were spread sufficiently on the surfaces of the lids on where they were applied, flew or repelled after having been applied.

○: Favorable lining adaptability.
X: Lining is difficult.

(Evaluation of Double-Seam Adaptability)

A can lid prepared above was double-seamed with a can body prepared above with no content. The double-seamed portion was cut out, buried and fixed in an epoxy resin, polished along the cross section thereof, and the cross section was observed through an optical microscope. Evaluation was made concerning if the size of double seam (length of the folded portion of the lid, length of the overlapping portion of the can body and the lid, length of the folded portion of the can body) was within a tolerable range (± 20%), and if voids are present in the double-seamed portion. The evaluated results were as shown in Tables 1 and 2.

○: Favorably double-seamed (double-seamed size is within a tolerable range and no void is present).
X: Poorly double-seamed (double-seamed size is outside the tolerable range and/or voids are present).

(Evaluation of Sealing Performance)

*Underwater Air Leakage Test.

Air leakage was tested in water to evaluate the sealing performance.

The can lid and can body prepared above were double-seamed together with no content, a hole was perforated in the central portion of the can body by using an electric drill, a hose was connected thereto, and the outer circumferential portion of the hose was sealed with an adhesive. Thereafter, the can body was submerged in water, the air of 0.2 MPa was fed through the hose, evolution of air bubbles through the double-seamed portion was observed by eyes, and the sealing performance of the double-seamed portion was evaluated on the following basis. The evaluated results were as shown in Tables 1 and 2.

○: Good (no leakage).
X: Poor (leaked).

*Preservation Test.

45 Grams of methylene chloride was introduced into the can body prepared above, and the can lid prepared above was double-sealed therewith. After having measured the weight of the can that was filled, the can was preserved with the lid being faced upward at 40°C for one week to measure if the weight has decreased. The evaluated results were as shown in Tables 1 and 2.

○: Good (weight has not decreased).
X: Poor (weight has decreased).

Table 1

| [Blend]<br>Parts by weight per 100 parts of the elastomer | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| Elastomer | | | | | | | | | |
| EPDM | 100 | 70 | 60 | 100 | 100 | 100 | 100 | 100 | 100 |
| SBR | | 30 | 40 | | | | | | |
| NBR | | | | | | | | | |
| vulcanized NR | | | | | | | | | |
| Filler | | | | | | | | | |
| titanium oxide | 12.0 | 12.0 | 12.0 | 12.0 | 12.0 | 12.0 | 12.0 | 5 | 12 |
| aluminum hydroxide | 20.0 | 20.0 | 20.0 | 20.0 | 20.0 | 20.0 | 20.0 | 10 | 88 |
| Vulcanizing agent | | | | | | | | | |
| zinc oxide | 20.0 | 20.0 | 20.0 | 4.5 | 50.0 | 20.0 | 20.0 | 20.0 | 20.0 |
| sulfur | 0.5 | 0.5 | 0.5 | 0.5 | 0.0 | 0.5 | 0.5 | 0.5 | 0.5 |
| Vulcanization accelerator | | | | | | | | | |
| zinc dibutyldithiocarbamate | 0.1 | 0.1 | 0.1 | 0.1 | 0.1 | 0.05 | 4.0 | 0.1 | 0.1 |
| Thickening agent | | | | | | | | | |
| methyl cellulose | 3.0 | 3.0 | 3.0 | 3.0 | 3.0 | 3.0 | 3.0 | 3.0 | 3.0 |
| Anti-aging agent | | | | | | | | | |
| 2,2-methylene-bis-[6-(1-methylcyclohexyl-p-cresol)] | 0.5 | 0.5 | 0.5 | 0.5 | 0.5 | 0.5 | 0.5 | 0.5 | 0.5 |
| Dispersion stabilizer | | | | | | | | | |
| Na dodecylbenzenesulfonate | 1.5 | 1.5 | 1.5 | 1.5 | 1.5 | 1.5 | 1.5 | 1.5 | 1.5 |
| Na salt of naphthalenesulfonic acid/formalin condensate | 0.5 | 0.5 | 0.5 | 0.5 | 0.5 | 0.5 | 0.5 | 0.5 | 0.5 |
| [Evaluation] | Ex. 1 | Ex. 2 | Ex. 3 | Ex. 4 | Ex. 5 | Ex. 6 | Ex. 7 | Ex. 8 | Ex. 9 |
| Lining adaptability | ○ | ○ | ○ | ○ | ○ | ○ | ○ | ○ | ○ |
| Double-seam adaptability | ○ | ○ | ○ | ○ | ○ | ○ | ○ | ○ | ○ |

(continued)

| [Evaluation] | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| Sealing performance | | | | | | | | | |
| underwater air leakage test (0.2 MPa) | ○ | ○ | ○ | ○ | ○ | ○ | ○ | ○ | ○ |
| methylene chloride filling test (preserved at 40°C for a week) | ○ | ○ | ○ | ○ | ○ | ○ | ○ | ○ | ○ |

Table 2

| [Blend]<br>Parts by weight per 100 parts of the elastomer | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|
| Elastomer | | | | | | | | |
|     EPDM | | | | 40 | | 100 | 100 | 100 |
|     SBR | 100 | | | 60 | 30 | | | |
|     NBR | | 100 | | | 70 | | | |
|     vulcanized NR | | | 100 | | | | | |
| Filler | | | | | | | | |
|     titanium oxide | 12.0 | 12.0 | 12.0 | 12.0 | 12.0 | 0 | 12.0 | 12.0 |
|     aluminum hydroxide | 20.0 | 20.0 | 20.0 | 20.0 | 20.0 | 0 | 20.0 | 20.0 |
| Vulcanizing agent | | | | | | | | |
|     zinc oxide | 20.0 | 20.0 | 20.0 | 20.0 | 20.0 | 20.0 | 0 | 20.0 |
|     sulfur | 0.5 | 0.5 | 0.5 | 0.5 | 0.5 | 0.5 | 0 | 0.5 |
| Vulcanization accelerator | | | | | | | | |
|     zinc dibutyldithiocarbamate | 0.1 | 0.1 | 0.1 | 0.1 | 0.1 | 0.1 | 0.1 | 0 |
| Thickening agent | | | | | | | | |
|     methyl cellulose | 3.0 | 3.0 | 3.0 | 3.0 | 3.0 | 3.0 | 3.0 | 3.0 |
| Anti-aging agent | | | | | | | | |
|     2,2-methylene-bis-[6-(1-methylcyclohexyl-p-cresol)] | 0.5 | 0.5 | 0.5 | 0.5 | 0.5 | 0.5 | 0.5 | 0.5 |
| Dispersion stabilizer | | | | | | | | |
|     Na dodecylbenzenesulfonate | 1.5 | 1.5 | 1.5 | 1.5 | 1.5 | 1.5 | 1.5 | 1.5 |
|     Na salt of naphthalenesulfonic acid/ formalin condensate | 0.5 | 0.5 | 0.5 | 0.5 | 0.5 | 0.5 | 0.5 | 0.5 |

(continued)

| [Evaluation] | | Comp. Ex. 1 | Comp. Ex. 2 | Comp. Ex. 3 | Comp. Ex. 4 | Comp. Ex. 5 | Comp. Ex. 6 | Comp. Ex. 7 | Comp. Ex. 8 |
|---|---|---|---|---|---|---|---|---|---|
| Lining adaptability | | ○ | ○ | ○ | ○ | ○ | × | ○ | ○ |
| Double-seam adaptability | | ○ | ○ | ○ | ○ | ○ | × | ○ | ○ |
| Sealing performance | | | | | | | | | |
| | underwater air leakage test (0.2 MPa) | ○ | ○ | ○ | ○ | ○ | × | × | × |
| | methylene chloride filling test (preserved at 40°C for a week) | × | × | × | × | × | × | × | × |

Table 3

| [Blend] Parts by weight per 100 parts of the elastomer | | Ex. 1 | Ex. 2 | Ex. 3 | Comp. Ex. 1 | Comp. Ex. 2 | Comp. Ex. 3 | Comp. Ex. 4 | Comp. Ex. 5 |
|---|---|---|---|---|---|---|---|---|---|
| Elastomer | | | | | | | | | |
| | EPDM | 100 | 70 | 60 | | | | 40 | |
| | SBR | | 30 | 40 | 100 | | | 60 | 30 |
| | NBR | | | | | 100 | | | 70 |
| | vulcanized NR | | | | | | 100 | | |
| Swelling degree (%) | | | | | | | | | |
| | immersed in methylene chloride | 81 | 160 | 190 | 652 | 782 | 269 | 470 | 539 |
| | immersed in acetone | 2 | 8 | 10 | 18 | 210 | 10 | 14 | 73 |
| | immersed in ethyl acetate | 11 | 30 | 40 | 93 | 143 | 4 | 60 | 75 |
| | immersed in ethyl cellosolve | 2 | 6 | 7 | 13 | 60 | 4 | 9 | 30 |
| | overall decision | ◎ | ○ | ○ | × | × | × | × | × |

Table 4

Unit: Breaking elongation (%).

| Compound | | Ex. 1 | Comp. Ex. 1 | Comp. Ex. 2 | Comp. Ex. 3 | Comp. Ex. 5 |
|---|---|---|---|---|---|---|
| elastomer used | | EPDM | SBR | NBR | vulcanized NR | NBR7:SBR3 |
| Heating condition | | | | | | |
| | No secondary heating | 615 | 715 | 668 | 533 | 458 |
| | 150°C, 1 hr. | 536 | 460 | 415 | 499 | 293 |
| | 150°C, 12 hrs. | 520 | 398 | 333 | 220 | 310 |

**Claims**

1. Use of a composition as a sealing compound, said composition comprising:

an aqueous dispersion which contains a rubber component of a latex of an ethylene propylene nonconjugated diene copolymer rubber as a chief component;
a vulcanizing agent in an amount of 5 to 50 parts by weight per 100 parts by weight of said rubber component;
a vulcanization accelerator in an amount of 0.05 to 4 parts by weight per 100 parts by weight of said rubber component; and
a filler;
said sealing compound being used for double-seamed portions or caulked portions between a container and a lid, or between a cell casing and an end portion of the cell casing.

**2.** Use of the composition as a sealing compound according to claim 1, wherein the filler is contained in an amount of 15 to 100 parts by weight per 100 parts by weight of said rubber component.

**3.** Use of the composition as a sealing compound according to claim 1, wherein a thickening agent is contained in an amount of 0.2 to 5 parts by weight per 100 parts by weight of said rubber component.

**4.** Use of the composition as a sealing compound according to claim 1, wherein a dispersion stabilizer is contained in an amount of 0.2 to 5 parts by weight per 100 parts by weight of said rubber component.

**Patentansprüche**

**1.** Verwendung einer Zusammensetzung als eine Dichtungsverbindung, wobei die Zusammensetzung Folgendes umfasst:

eine wässrige Dispersion, die eine Gummikomponente eines Latex eines unkonjugierten Ethylen-Propylen-Dien-Copolymergummis als eine Hauptkomponente enthält;
ein Vulkanisiermittel in einer Menge von 5 bis 50 Gewichtsteile pro 100 Gewichtsteile der Gummikomponente;
einen Vulkanisierbeschleuniger in einer Menge von 0,05 bis 4 Gewichtsteile pro 100 Gewichtsteile der Gummikomponente; und
ein Füllmittel;
wobei die Dichtungsverbindung für doppelt gefalzte Abschnitte oder abgedichtete Abschnitte zwischen einem Behälter und einem Deckel oder zwischen einem Zellengehäuse und einem Endabschnitt des Zellengehäuses verwendet wird.

**2.** Verwendung der Zusammensetzung als eine Dichtungsverbindung nach Anspruch 1, wobei das Füllmittel in einer Menge von 15 bis 100 Gewichtsteile pro 100 Gewichtsteile der Gummikomponente enthalten ist.

**3.** Verwendung der Zusammensetzung als eine Dichtungsverbindung nach Anspruch 1, wobei ein Eindickmittel in einer Menge von 0,2 bis 5 Gewichtsteile pro 100 Gewichtsteile der Gummikomponente enthalten ist.

**4.** Verwendung der Zusammensetzung als eine Dichtungsverbindung nach Anspruch 1, wobei ein Dispersionsstabilisiermittel in einer Menge von 0,2 bis 5 Gewichtsteile pro 100 Gewichtsteile der Gummikomponente enthalten ist.

**Revendications**

**1.** Utilisation d'une composition en tant que composé d'étanchéité, ladite composition comprenant :

une dispersion aqueuse qui contient un composant caoutchouc d'un latex d'un caoutchouc copolymère diène non conjugué éthylène propylène en tant que composant principal ;
un agent vulcanisant à une teneur de 5 à 50 parties en poids pour 100 parties en poids dudit composant caoutchouc ;
un accélérateur de vulcanisation à une teneur de 0,05 à 4 parties en poids pour 100 parties en poids dudit composant caoutchouc ; et
une charge ;
ledit composé d'étanchéité étant utilisé pour des parties à double sertissage ou des parties matées entre un récipient et un couvercle, ou entre un boîtier de compartiment et une partie extrémité du boîtier de compartiment.

**2.** Utilisation de la composition en tant que composé d'étanchéité selon la revendication 1, la charge étant présente à une teneur de 15 à 100 parties en poids pour 100 parties en poids dudit composant caoutchouc.

**3.** Utilisation de la composition en tant que composé d'étanchéité selon la revendication 1, un épaississant étant présent à une teneur de 0,2 à 5 parties en poids pour 100 parties en poids dudit composant caoutchouc.

**4.** Utilisation de la composition en tant que composé d'étanchéité selon la revendication 1, un stabilisateur de dispersion étant présent à une teneur de 0,2 à 5 parties en poids pour 100 parties en poids dudit composant caoutchouc.

**EP 2 130 891 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005146138 A
- US 4818785 A
- GB 1214940 A
- US 5807918 A
- JP 2005290326 B